# EUROPEAN PATENT SPECIFICATION

(11) **EP 2 043 881 B1**
(45) Date of publication and mention of the grant of the patent: **16.03.2016**
(21) Application number: 07747550.7
(22) Date of filing: 05.07.2007
(51) Int. Cl.: B60B 31/02

(54) **A DEVICE FOR STRAIGHTENING SPOKED WHEELS**
VORRICHTUNG ZUM BEGRADIGEN VON SPEICHENRÄDERN
DISPOSITIF POUR REDRESSER DES ROUES À RAYONS

(30) Priority: 12.07.2006 NL 2000142
(43) Date of publication of application: 08.04.2009
(73) Proprietor: Holland Mechanics BV, 1440 AJ Purmerend (NL)
(72) Inventor: CRUYFF, Marcel, 1127 PH Den Ilp (NL)
(74) Representative: Uittenbogaart, Gustaaf Adolf
(86) International application number: PCT/NL2007/050331
(87) International publication number: WO 2008/007954

(56) References cited:
- EP-A- 0 476 749
- EP-A- 0 561 459
- EP-A- 0 742 112
- WO-A-2004/103734
- DE-A1- 1 505 855
- US-A- 610 652
- US-A- 2 525 253
- US-A- 3 908 729
- US-A- 4 799 304

## Description

The invention relates to a device according to the preamble of claim 1. Such a device is known from EP 0476749 of the same applicant. The disadvantage of the known device is that the screw element is guided along the spokes to the nipples, and thus has to engage upon the part of the nipple projecting through the hole in the rim on the inside of the rim, in order to be able to rotate the nipple. This part of the nipple projecting through the rim makes it necessary to have a hole in the rim that is considerably larger than the diameter of the spoke. This limits the stiffness of the rim. In order to reinforce the rim, nipples that do not project on the inside of the rim and that can be tightened solely from the outside are used. As a result of this, a greater spoke tension can be permitted. In order still to be able to position the screw element accurately on a nipple, the device is designed according to the characterizing portion of claim 1. As a result of this, the screw element is parallel to the rotation axis of the nipple when it is placed on the nipple from the outer circumference, so that it is possible to bring the spoke under high tension.

The prior art of DE 1505855 and EP 742112 disclose devices with screw elements on the outside circumference of the rim. The rotation axes of the screw elements intersect the rotation axis of the wheel in the middle of the hub between the flanges on which the ends of the spokes are attached. This means that the spokes are never parallel to the rotation axis of the screw element and fitting the screw element on the nipple does not lead to alignment. This means that the known devices do not disclose the alignment of the rotation axis of the screw element with the rotation axis of a nipple of a tensioned spoke which makes fitting the screw element on the nipple difficult and which prevents bringing automatically tensioned spokes to a high tension.

According to a further improved embodiment, the device is designed according to claim 2. Bringing the spoke between the guide faces ensures that the spoke is brought into line with the axis of rotation of the screw element. As a result of this, it is possible to avoid the problems arising from the fact that the holes for the spokes have not been made in the rim at regular intervals around the circumference of the rim, so that the spokes are not entirely regularly spaced around the circumference.

According to a further improved embodiment, the device is designed according to claim 3. As a result of this, the screw element can be placed quickly and accurately on the nipple.

According to a further improved embodiment, the device is designed according to claim 4. As a result of this, the spoke is prevented from possibly turning along with the nipple. This prevents torsional stress in the spoke or deformation from occurring when the spoke is being fixed in the hub.

According to a further improved embodiment, the device is designed according to claim 5. As a result of this, the spoke tension can always be corrected in two spokes simultaneously, which saves time.

The invention is explained below on the basis of an exemplary embodiment with reference to a drawing. In the drawing:
Figure 1 shows a diagrammatic front view of a device for straightening a spoked wheel;
Figure 2 shows a diagrammatic side view of a part of the device shown in Figure 1;
Figure 3 shows a section of the rim of a spoked wheel to be straightened with a tool for rotating a nipple;
Figure 4 shows a diagrammatic drawing of various parts of the straightening machine of Figure 1;
Figure 5 shows a perspective view of the spoked wheel and a part of the device of Figure 1 with the tool for rotating the nipple;
Figure 6 shows a perspective view of the tool for rotating the nipple; and
Figure 7 shows a perspective view of a clamp according to the device of Figure 1 for clamping a spoke.

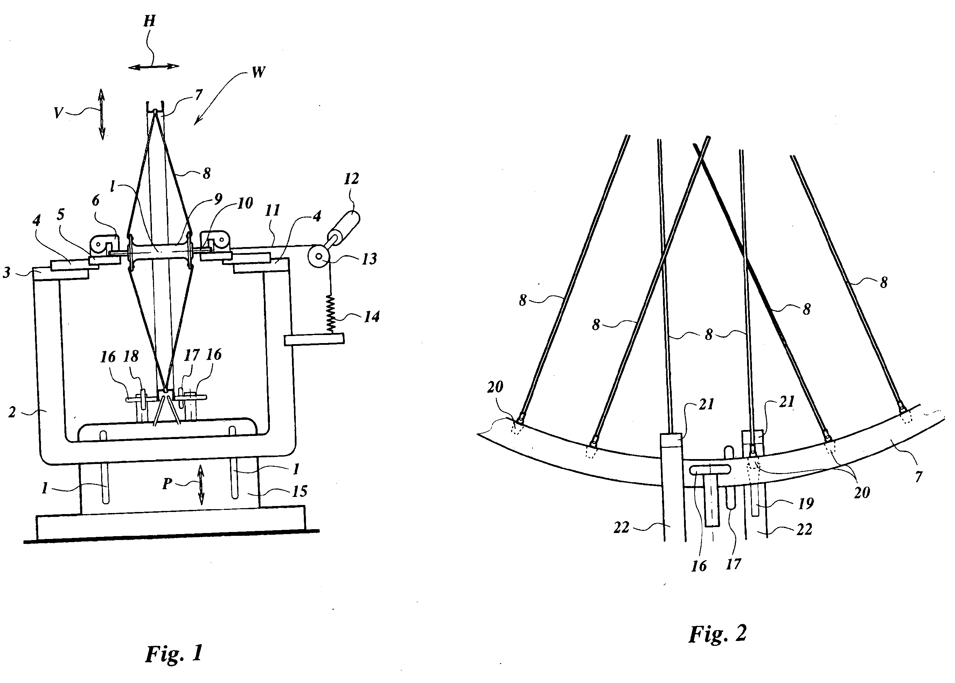

Figures 1 and 2 show a device for straightening a spoked wheel W that is composed of a rim 7, a hub 9, and a number of spokes 8 between the rim 7 and the hub 9. A comparable device is disclosed in European Application EP-A-0476749 of the same applicant. The hub 9 has a spindle 10 and a bearing (not shown) between the spindle 10 and the hub 9, so that the wheel W can rotate about an axis of rotation 1. During the rotation of the rim 7 about the axis of rotation 1, differences in the spoke tensions of the spokes 8 cause the rim 7 at a measuring position to move in a horizontal direction H and in a vertical direction V relative to the hub 9. This is undesirable during use of the wheels W, and the wheels are therefore straightened in the device shown in Figures 1 and 2, the wheel W being placed in the device.

The spindle 10 is clamped at both ends in the clamps 6 of the spindle supports 5. Said spindle supports 5 are each fixed on a carriage 4, which can move in the horizontal direction H along a rail 3. The rail 3 is fixed on a supporting frame 2, and the supporting frame 2 is adjustable in height along a frame 15, along rails 1 by a drive (not shown) in a direction P. Two drive wheels 16 placed symmetrically relative to the center plane of the wheel W are placed on the frame 15 in the center below the spindle supports 5. An optical height measuring device, consisting of a transmitter 17 with a light source and a receiver 18 with a light sensor, is placed next to the drive wheels 16.

When the wheel W is being placed in the device the clamps 6 are opened and the drive wheels 16 are placed slightly apart. The spindle 10 of the wheel is placed in the spindle supports 5 and the clamps 6 are closed. The supporting frame 2 is then moved in the direction P in such a way that the rim 7 is placed in a desired position between the drive wheels 16. The height adjustment in the direction P can possibly be performed prior to placing the wheel W in the clamps 6 if the distance between the axis of rotation 1 and the rim 7 is known in a control system of the device. After the wheel W positioned at the correct height between the drive wheels 16, the drive wheels 16 are brought symmetrically towards each other in such a way that the rim 7 of the wheel W is centered between the drive wheels 16. On rotation of the wheel W by the drive wheels 16, the optical height measuring device 17, 18 will measure the difference in the distance between the axis of rotation 1 and the rim 7 at the position of the drive wheels as vertical travel V, and, because of the symmetrical arrangement between the drive wheels 16, the hub 9 of the wheel W will move in the horizontal direction H along the rail 3. This horizontal travel is measured by fixing a measuring wire 11 on the carriage 4, the measuring wire 11 being kept tensioned by a spring 14 and being guided over a guide wheel 13, and the horizontal travel H being measured by an encoder 12 connected to the guide wheel 13.

In order to bring the horizontal travel H and the vertical travel V within the desired tolerances, the tension in the spokes 8 must be altered by rotating nipples 20. For the rotation of the nipples 20, screw elements 19 are provided on the outside of the rim 7 near the drive wheels 16, which screw elements 19 can be placed around the nipples 20. The screw elements 19 are fitted so that they are slidable on a frame 22 in the direction of the spoke 8. The frame 22 is also provided with a spoke clamp 21, which is fitted around a spoke 8 so that, for example, it prevents rotation of the spoke 8 during the rotation of the nipple 20.

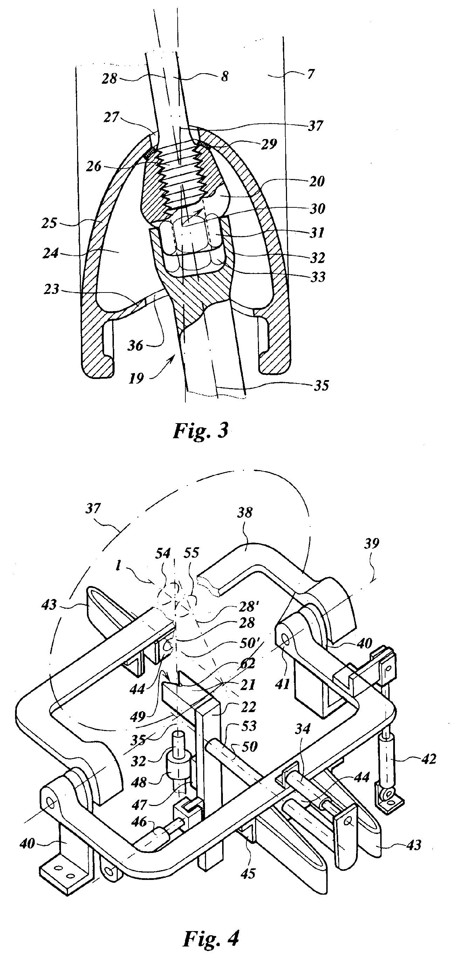

Figure 3 shows an exemplary embodiment of the rim 7, in which the rim 7 is designed in such a way that it is capable of bearing high loads, and high tensions in the spoke 8. For this purpose, the rim 7 is designed with an inner flange 25 and an outer flange 23, which flanges enclose a rim chamber 24. The inner flange 25 has a hole 27 with a small diameter, which is such that it is slightly larger than a screw thread 26 of the spoke 8, so that said screw thread can be inserted through said hole and the nipple 20 screwed onto the screw thread 26 rests upon the edge of the hole 27. A nipple hole 36 is provided in the outer flange 23, which nipple hole is used for placing the nipple 20 on the screw thread 26 and for enabling the screw element 19 to be inserted through it in order to turn the nipple 20.

The nipple 20 screwed onto the screw thread 26 has an internal screw thread with an axis that corresponds to an axis 28 of the spoke. The axis 28 of the spoke goes through the center of the rim 7 at the position of the axis 37 of the rim.

A bore 30 is provided in the nipple 20, in line with the internal screw thread that is screwed onto the screw thread 26, and on the side facing away from the spoke 8 the nipple 20 has an external hexagonal head 31. A ring 29 is provided between the inner flange 25 and the nipple 20, so that the nipple 20 is supported well against the inner flange 25 and can rotate well. The screw element 19 has an axis of rotation 35 and a key head 32 with a hexagonal socket 33. Said hexagonal socket 33 fits closely around the hexagonal head 31 of the nipple 20. For connection of the screw element 19 to the nipple 20 it is essential for the axis 28 of the spoke and the axis of rotation 25 to be more or less in line with each other.

It will be clear that the hexagonal head 31 of the nipple 20 that comes into contact with the screw element 19 can also be of another shape. The design can be such that the screw element 19 with a special external shape is inserted into a corresponding opening of the nipple 20. It remains important here for the axis of rotation 35 to lie more or less in line with the axis 28 of the spoke at the time when the screw element 19 is being placed on the nipple 20.

Figure 4 shows diagrammatically the parts of the device that are used for bringing the axis 28 of the spoke into line with the axis of rotation 35 of the screw element 19. Figure 4 shows the axis 37 of the rim and shows the hub 10 with a first hub flange 54 and a second hub flange 55. In the case of the wheel W the direction of the axis 28 of the spoke alternates from the rim 7 to the first flange 54 and from the rim 7 to the second flange 55, indicated in the drawing by the directions 28 and 28' respectively. In the device shown, two spokes 8 belonging to the spoke axes 28 and 28' can be altered in tension simultaneously because there are two screw elements 19. Said screw elements 19 are fitted on the right-hand frame 41 and the left-hand frame 38 respectively. The left-hand frame 38 and the right-hand frame 41 are constructed more or less identically and in mirror image relative to the axis 37 of the rim. The right-hand frame 41 will be discussed in more detail below, the left-hand frame 38 being composed in a corresponding manner.

Two frame supports 40 are placed on the frame 15, which frame supports form an axis of rotation 39 of the frame, about which the frames 38 and 41 can move by means of a bearing. The right-hand frame 41 is rotated by a frame adjusting device 42. By adjustment of the supporting frame 2 in the direction P, the axis 37 of the rim is moved in the vertical direction, in such a way that the intersection points of the axes 28 and 28' of the spoke lie with the axis 37 of the rim on the axis of rotation 39 of the frame.

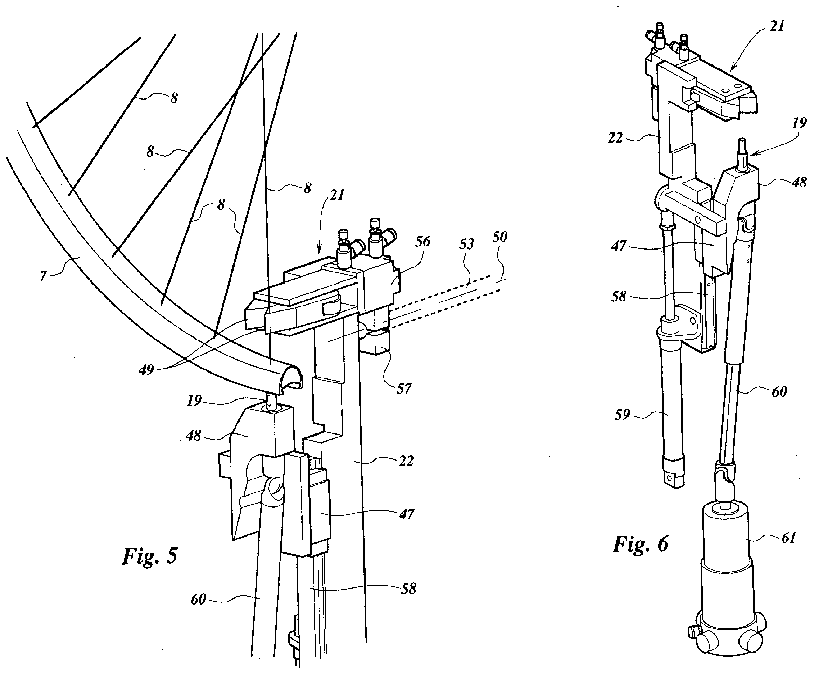

A spindle guide 44 is mounted by means of leaf springs 43 and supports 45 on the right-hand frame 41. The spindle guide 44 has an axis 50, which intersects the axis of rotation 39 of the frame, bending of the leaf springs 43 enabling the point of intersection to move along the axis of rotation 39 of the frame. A spindle 53 is slidable and rotatable in the spindle guide 44. The frame 22 is fixed on the spindle 53, with a frame adjusting device 46 rotating the frame 22 about the axis 50 and a spindle adjusting device 34 being able to slide the spindle 53 in the direction of the axis 50 through the spindle guide 44. A carriage 47 is mounted on the frame 22 in such a way that said carriage can move along a rail 58 (see Figure 5). A screw tool bearing 48 with an axis of rotation 35 of the screw is provided on the carriage 47, the direction of movement of the carriage 47 along the rail 58 being in the direction of the axis of rotation 35 of the screw. By adjusting the frame adjusting device 42, the spindle adjusting device 34 and the frame adjusting device 46, the axis of rotation 35 of the screw can be brought into the same direction as the axis 28 of the spoke.

The spoke clamp 21 is fitted on the frame 22, which spoke clamp 21 is provided with two guide faces 49. When the frame 22 is moved towards the spoke by the spindle adjusting device 34, the guide faces 49 are pressed against the spoke 8 until the spoke 8 is in a spoke opening 62, which spoke opening 62 is provided at the position of the point of intersection of the guide faces 49 and lies in line with the axis of rotation 35 of the screw. The spindle guide 44 moves here by means of the leaf springs 43 in such a way that the point of intersection of the axis 50 moves slightly along the axis of rotation 39. This movement causes the axis of rotation 35 of the screw to move accurately into line with the axis 28 of the spoke.

Figure 5 shows the situation in which the screw element 19 has been placed on a nipple 20 (not visible) by movement of the bearing of the screw tool 48 towards the rim 7. The screw tool bearing 48 is fixed on the carriage 47, which is movable along the rail 58 in the direction of the axis of rotation 35 of the screw. The spoke clamp 21 is fitted around the spoke 8. The frame 22 has a spindle clamp 57 for fixing the spindle 53 on the frame 22. A coupling shaft 60 can rotate the screw element 19 supported in the bearing 48. Figure 6 shows that the coupling shaft 60 is telescopic and is driven by a motor 61. The carriage 47 is moved along rail 58 by a pneumatic cylinder 59.

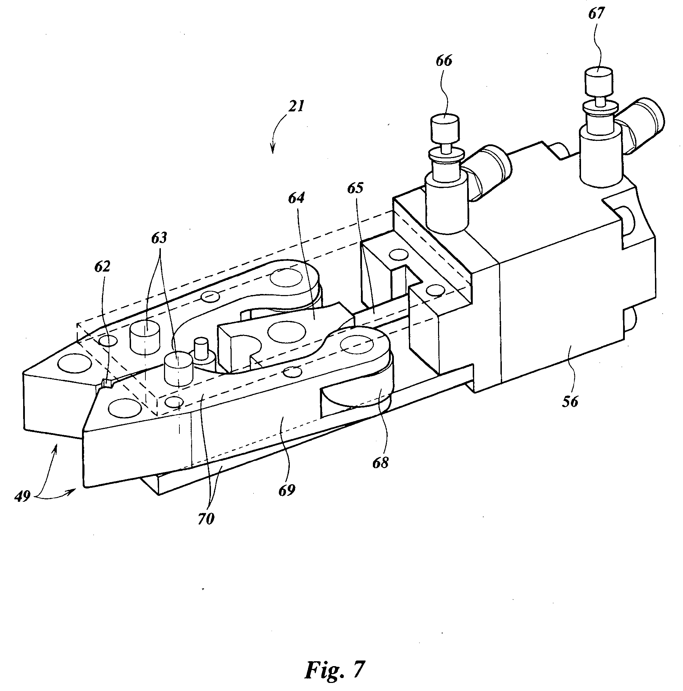

Figure 7 shows an embodiment of the spoke clamp 21. This embodiment is suitable for clamping the spoke 8, in such a way that when the nipple 20 rotates the spoke 8 will not rotate along with it. Each guide face 49 forms part of a clamping piece 69. Said clamping piece 69 can rotate about a pin 63, which is fitted between two plates 70. A wedge piece 64 is fitted between the end of the clamping pieces 69 facing away from the guide faces 49, which wedge piece 64 can be moved away from and towards the pins 63 by a piston rod 65, which forms part of a pneumatic cylinder 59. A roll 68 is fitted on the clamping piece 69, which roll has an axis of rotation that is parallel to the pin 63, so that by moving the wedge piece the roll 68 rolls along the edges of the wedge piece 64. During movement of the spoke clamp 21 towards the spoke 8 the wedge piece 64 is positioned in such a way that the guide faces 49 can be as far apart as possible and the spoke opening 62 is as large as possible. During movement of the spoke clamp 21 towards the spoke, the spoke 9 glides along the guide faces 49 until the spoke 8 is resting against the plates 70 and is situated in the spoke opening 62. The pneumatic cylinder 59 is then activated, with the result that the piston rod 65 moves the wedge piece 64 and the rolls 68 are moved outwards, and the clamp closes around the spoke 8. The pneumatic cylinder 59 is provided with air connections 66 and 67 in the known manner.

The device described above is used for straightening wheels in a bicycle factory. Different models of bicycles are made in a bicycle factory, and the different models of bicycles have different models of bicycle wheels, and then there are also the differences between the front wheels and the rear wheels. It is possible in this case that in a certain run wheels of the same model always have to be straightened in the device, and that it is known in the control system of the device which model has to be straightened in the device at that time. In that case the control system knows the wheel diameter, the number of spokes, the dimensions of the hub, and also the permissible horizontal and vertical deviations. With this data the device can be set in the correct manner and the straightening process can be carried out. If wheels of different models are delivered in a mixed batch, there can be sensors by means of which the model of the wheel is established, after which the data belonging to the model is read out of a memory and the straightening process can be carried out. Another possibility is that the device is provided with sensors that measure the important characteristics of the wheel directly on the wheel and process them in the control system. Examples are the wheel diameter and the number of spokes, and sensors can also be fitted on the frame 22 of the device so that, before the screw element 19 is connected to the nipple 20, they control the frame adjusting device 42 and the frame adjusting device 46 in such a way that the axis of rotation 35 of the screw is parallel to the axis 28 of the spoke. Standard values can be used as permissible horizontal and vertical deviations, or possibly also values that are derived from one measured datum or a combination of a number of measured data.

## Claims

1. A device for straightening a spoked wheel (W), which comprises a rim (7) and a hub (9) with a wheel spindle (10), spokes (8) each with a screw thread (26) with a first axis of rotation (28) inserted between the rim and the hub through a hole (36) in the rim, and nipples (20) screwed onto the spokes, wherein the device has clamping means (6) for clamping the wheel spindle, drive means (16) for rotating the wheel and positioning the rim, a measuring device (11; 17,18) for during rotation of the wheel detecting a horizontal movement and a vertical movement of the rim relative to the clamping means, a screw element (19) with a second axis of rotation (35) for rotating a nipple, means (34,59) for positioning the screw element around the nipple, and a control system for controlling the device and for a wheel mounted in the device establishing the directions of the first axes of rotation (28), **characterized in that** the device comprises a first frame (22) with adjusting means (42,46) that rotate the first frame relative to the clamping means (6) around two rotation axes (39,50), a first rail (58) mounted on the first frame, mounted on the first rail a first carriage (47) and the screw element is mounted on the first carriage that is movable parallel to the second axis of rotation (35) along the first rail at the outside of the wheel (W), whereby the drive means and the adjusting means are connected to the control system and position the second axis of rotation (35) parallel to the first axis of rotation (28).

2. The device as claimed in claim 1, wherein the first frame (22) is provided with a locating head (21) with two guide faces (49) tapering towards each other, ending in a spoke opening (62) in line with the second axis of rotation, and the locating head (21) can move in a direction perpendicular to the second axis of rotation towards the first axis of rotation (28) towards a spoke (8), so that the latter is guided into the spoke opening.

3. The device as claimed in claim 2, wherein, by guiding the spoke (8) into the spoke opening (62), the first axis of rotation (28) is aligned with the second axis of rotation (37).

4. The device as claimed in one of the preceding claims, wherein the locating head (21) is provided with clamping means (59, 64, 65, 68, 69) for clamping the spoke (8).

5. The device as claimed in claim 2, 3 or 4, wherein there are two screw elements (19) with locating heads (21) that can engage upon adjacent spokes (8) on either side of a wheel (W).

## Patentansprüche

1. Vorrichtung zum Richten eines Speichenrades (W), das eine Felge (7) und eine Nabe (9) mit einer Radwelle (10), Speichen (8), die jeweils ein Schraubengewinde (26) mit einer ersten Drehachse (28) aufweisen und zwischen der Felge und der Nabe durch ein Loch (36) in der Felge eingesetzt sind, und auf die Speichen aufgeschraubte Nippel (20) aufweist,
wobei die Vorrichtung aufweist:
eine Spannvorrichtung (6) zum Einspannen der Radwelle, eine Antriebseinrichtung (16) zum Drehen des Rades und zum Positionieren der Felge;
eine Messeinrichtung (11; 17, 18) zum Erfassen einer Horizontalbewegung und einer Vertikalbewegung der Felge bezüglich der Spannvorrichtung während der Drehbewegung des Rades;
ein Schraubelement (19) mit einer zweiten Drehachse (35) zum Drehen eines Nippels;
eine Einrichtung (34, 59) zum Positionieren des Schraubelements um den Nippel; und
ein Steuersystem zum Steuern der Vorrichtung und zum Einstellen der Richtungen der ersten Drehachsen (28) für ein in der Vorrichtung montiertes Rad;
**dadurch gekennzeichnet, dass** die Vorrichtung aufweist:
einen ersten Rahmen (22) mit Einstelleinrichtungen (42, 46), die den ersten Rahmen bezüglich der Spannvorrichtung (6) um zwei Drehachsen (39, 50) drehen;
eine am ersten Rahmen montierte erste Schiene (58), wobei ein erster Schlitten (47) auf der ersten Schiene montiert ist, und wobei das Schraubelement auf dem ersten Schlitten montiert ist, der parallel zur zweiten Drehachse (35) entlang der ersten Schiene an der Außenseite des Rades (W) beweglich ist;
wobei die Antriebseinrichtung und die Einstelleinrichtungen mit dem Steuersystem verbunden sind und die zweite Drehachse (35) parallel zur ersten Drehachse (28) anordnen.

2. Vorrichtung nach Anspruch 1, wobei der erste Rahmen (22) einen Positionierungskopf (21) mit zwei Führungsflächen (49) aufweist, die sich zueinander hin verjüngen und in einer Speichenöffnung (62) enden, die mit der zweiten Drehachse ausgerichtet ist, und wobei der Positionierungskopf (21) sich senkrecht zur zweiten Drehachse zur ersten Drehachse (28) und zu einer Speiche (8) hin bewegen kann, so dass die Speiche in die Speichenöffnung geführt wird.

3. Vorrichtung nach Anspruch 2, wobei durch Führen der Speiche (8) in die Speichenöffnung (62) die erste Drehachse (28) mit der zweiten Drehachse (37) ausgerichtet wird.

4. Vorrichtung nach einem der vorangehenden Ansprüche, wobei der Positionierungskopf (21) eine Spannvorrichtung (59, 64, 65, 68, 69) zum Einspannen der Speiche (8) aufweist.

5. Vorrichtung nach Anspruch 2, 3 oder 4, wobei zwei Schraubelemente (19) mit Positionierungsköpfen (21) vorgesehen sind, die mit benachbarten Speichen (8) auf jeder Seite eines Rades (W) in Eingriff gebracht werden können,

## Revendications

1. Dispositif pour redresser une roue à rayons (W), qui comprend une jante (7) et un moyeu (9) avec un axe de roue (10), des rayons (8) chacun avec un filetage de vis (26) avec un premier axe de rotation (28) inséré entre la jante et le moyeu à travers un trou (36) dans la jante, et des écrous (20) vissés sur les rayons, où le dispositif a un moyen de serrage (6) pour serrer l'axe de roue, un moyen d'entraînement (16) pour faire tourner la roue et positionner la jante, un dispositif de mesure (11 ; 17, 18) pour détecter, pendant la rotation de la roue, un déplacement horizontal et un déplacement vertical de la jante par rapport au moyen de serrage, un élément de vis (19) avec un deuxième axe de rotation (35) pour faire tourner un écrou, un moyen (34, 59) pour positionner l'élément de vis autour de l'écrou, et un système de commande pour commander le dispositif et pour une roue montée dans le dispositif établissant les directions des premiers axes de rotation (28), **caractérisé en ce que** le dispositif comprend un premier cadre (22) avec un moyen de réglage (42, 46) qui fait tourner le premier cadre par rapport au moyen de serrage (6) autour de deux axes de rotation (39, 50), un premier rail (58) monté sur le premier cadre, un premier chariot (47) monté sur le premier rail et l'élément de vis est monté sur le premier chariot qui est mobile parallèle au deuxième axe de rotation (35) le long du premier rail à l'extérieur de la roue (W), moyennant quoi le moyen d'entraînement et le moyen de réglage sont reliés au système de commande et positionnent le deuxième axe de rotation (35) parallèle au premier axe de rotation (28).

2. Dispositif tel que revendiqué dans la revendication 1, dans lequel le premier cadre (22) est pourvu d'une tête de positionnement (21) avec deux faces de guidage (49) se rétrécissant l'une vers l'autre, se terminant par une ouverture de rayon (62) en ligne avec le deuxième axe de rotation, et la tête de positionnement (21) peut se déplacer dans une direction perpendiculaire au deuxième axe de rotation vers le premier axe de rotation (28) vers un rayon (8), de sorte que cette dernière soit guidée dans l'ouverture de rayon.

3. Dispositif tel que revendiqué dans la revendication 2, dans lequel, en guidant le rayon (8) dans l'ouverture de rayon (62), le premier axe de rotation (28) est aligné avec le deuxième axe de rotation (37).

4. Dispositif tel que revendiqué dans l'une des revendications précédentes, dans lequel la tête de positionnement (21) est pourvue d'un moyen de serrage (59, 64, 65, 68, 69) pour serrer le rayon (8).

5. Dispositif tel que revendiqué dans les revendications 2, 3 ou 4, dans lequel ils existent deux éléments de vis (19) avec des têtes de positionnement (21) qui peuvent s'engager sur des rayons adjacents (8) sur chaque côté d'une roue (W).
